# EUROPÄISCHE PATENTSCHRIFT

(11) **EP 3 483 494 B1**
(45) Veröffentlichungstag und Bekanntmachung des Hinweises auf die Patenterteilung: **01.07.2020**
(21) Anmeldenummer: 18204824.9
(22) Anmeldetag: 07.11.2018
(51) Int. Cl.: F16P 1/00, F16P 1/02, F16P 3/08, B65B 57/00

(54) **VERPACKUNGSMASCHINE MIT AN SCHUTZABDECKUNG ANGEORDNETER TOKENBEFESTIGUNGSKAPSEL SOWIE VERFAHREN**
PACKAGING MACHINE WITH TOKEN FIXING CAPSULE ARRANGED TO PROTECTIVE COVER AND METHOD
MACHINE D'EMBALLAGE DOTÉE D'UN EMBOUT DE FIXATION DE JETON AGENCÉ SUR UN COUVERCLE DE PROTECTION AINSI QUE PROCÉDÉ

(30) Priorität: 13.11.2017 DE 102017126615
(43) Veröffentlichungstag der Anmeldung: 15.05.2019
(73) Patentinhaber: MULTIVAC Sepp Haggenmüller SE & Co. KG, 87787 Wolfertschwenden (DE)
(72) Erfinder: SCHAUB, Hubert, 87448 Waltenhofen (DE); WÖLFLE, Manuel, 87493 Lauben (DE); REICHART, Nadine, 87541 Unterjoch/Bad Hindelang (DE); WANNER, Alexander, 87730 Bad Grönenbach (DE)
(74) Vertreter: Grünecker Patent- und Rechtsanwälte PartG mbB

(56) Entgegenhaltungen:
- EP-A1- 2 749 499
- DE-A1-102008 053 665

## Beschreibung

Die Erfindung bezieht sich auf eine Verpackungsmaschine gemäß dem Oberbegriff des Anspruchs 1 sowie ein Verfahren gemäß dem Oberbegriff des Anspruchs 7.

Zur Gewährleistung eines sicheren Produktionsbetriebs werden bisher an einer Verpackungsmaschine (s. z.B. EP 2 749 499), insbesondere an einer Tiefziehverpackungsmaschine oder an einer Schalenverschließmaschine, entlang einer Produktionsstrecke, beispielweise vor und nach einer Form- und/oder Siegelstation, Schutzabdeckungen verwendet, die verhindern können, dass Bediener in den Produktionsfluss hineingreifen. Bisher sind Lösungen bekannt, worin die Schutzabdeckungen lose auf einer Oberseite des Maschinengestells abgelegt sind. Zum Herstellen eines Zugriffs in die Verpackungsmaschine, z. B. zu Reinigungs- und/oder Wartungszwecken, werden die Schutzabdeckungen einfach abgenommen.

Es sind außerdem Lösungen bekannt, in denen die Anwesenheit und/oder die ordnungsgemäße Auflage der Schutzabdeckungen geprüft wird. In Fällen, in denen eine Abwesenheit oder eine nicht ordnungsgemäße Auflage der Schutzabdeckungen erkannt wird, kann ein Betrieb der Verpackungsmaschine verhindert werden, um Verletzungen zu verhindern. Dazu werden an den Flächen der Schutzabdeckungen, an denen diese auf der Verpackungsmaschine aufliegen, Erkennungsmerkmale vorgesehen, die durch Sensoren der Verpackungsmaschine erkannt werden können. Dabei kann es sich z. B. um Magneten handeln.

Die herkömmliche Befestigung solcher Magneten mittels Kunststoffkapseln weist mehrere Nachteile auf, die sie insbesondere für Anwendungen mit hohen Hygieneanforderungen, wie z. B. Lebensmittelproduktion oder medizinische Anwendungen, ungeeignet machen. Bei solchen Anwendungen kommen die Kunststoffkapseln häufig mit aggressiven Reinigungsmitteln und/oder anspruchsvollen Umgebungsbedingungen, z. B. hohe Temperatur und/oder Luftfeuchtigkeit ggf. bei hohem Druck, in Berührung. Kostengünstige Kunststoffe, wie sie für solche Kleinteile eingesetzt werden müssen, halten solchen Bedingungen nicht Stand und/oder altern schneller als unter weniger harschen Bedingungen. Des Weiteren sind existierende Befestigungskapseln nur schwierig abzudichten, was die Reinigung weiter erschwert.

Insbesondere im gealterten Zustand besteht zudem die Gefahr, dass die versprödeten Kunststoffe schon durch kleinere Stöße zerbrechen und sich in der Folge von den Schutzabdeckungen lösen. Dadurch müssen die herkömmlichen Befestigungen häufig ausgetauscht werden.

Noch gravierender ist allerdings das Risiko, dass die durch die Verpackungsmaschine verpackten Produkte durch Splitter kontaminiert werden, was teure Rückrufaktionen, im medizinischen Bereich sogar Schadenersatzklagen zur Folge haben kann.

Es ist Aufgabe der vorliegenden Erfindung, eine Verpackungsmaschine mit einer verbesserten Art der Befestigung für Erkennungsmerkmale an Schutzabdeckungen anzugeben. Es ist darüber hinaus eine Aufgabe, ein verbessertes Verfahren zum Befestigen eines Erkennungsmerkmals an einer Schutzabdeckung einer Verpackungsmaschine anzugeben. Vorteilhafte Weiterbildungen sind in den entsprechenden abhängigen Ansprüchen angegeben.

Die erfindungsgemäße Verpackungsmaschine umfasst eine Schutzabdeckung und eine an der Schutzabdeckung angeordnete Tokenbefestigungskapsel mit einem Aufnehmer, der zum Aufnehmen eines Tokens konfiguriert ist und eine erste Kontaktfläche aufweist, und mit einer Kappe, die zum Abdecken einer Öffnung des Aufnehmers konfiguriert ist und eine zweite Kontaktfläche aufweist, wobei die erste Kontaktfläche und die zweite Kontaktfläche miteinander in Kontakt sind, wenn die Kappe die Öffnung des Aufnehmers abdeckt. Die Erfindung zeichnet sich dadurch aus, dass der Aufnehmer oder die Kappe eine Rändelung aufweist, wobei die Rändelung an der ersten oder der zweiten Kontaktfläche vorgesehen ist. Dies hat den Vorteil zur Folge, dass die Erhebungen bzw. Vertiefungen der Rändelung in das Material des jeweiligen Gegenstücks eindringen, wodurch eine nur durch Zerstörung lösbare Verbindung entstehen kann. Dadurch können Sicherheitsanforderungen besser erfüllt werden.

Unter Schutzabdeckungen sind z. B. an der Verpackungsmaschine und/oder einem Maschinengestell derselben vorgesehene Komponenten zu verstehen, die Bereiche der Verpackungsmaschine von oben und/oder der Seite abdecken, wie z. B Schutzhauben oder Seitenverkleidungen. Auch Einlegeschablonen, die das Befüllen der produzierten Verpackungen erleichtern, können als Schutzabdeckungen im Sinne der Erfindung angesehen werden.

Als Token im Sinne der Erfindung sind Gegenstände anzusehen, die eine Erkennung, ein Erfassen oder ein Detektieren desselben durch eine entsprechende Erfassungseinheit, insbesondere durch einen Sensor, ermöglichen oder erleichtern. Wie bereits angedeutete kann ein einfacher Magnet als ein solcher Token fungieren. Denkbar sind außerdem ein maschinell, insbesondere drahtlos, auslesbarer Datenträger, wie z. B. eine RFID-Vorrichtung.

Es ist denkbar, dass die Rändelung Rillen aufweist. Diese können beispielsweise geradlinig oder kurvenförmig verlaufen. Besonders vorteilhaft ist es, wenn die Rillen parallel oder in einem Winkel zu einer Aufsetzrichtung verlaufen, in der die Kappe auf den Aufnehmer aufsetzbar ist. Ein paralleler Verlauf kann dabei den Vorteil aufweisen, dass die Kappe leichter aufzusetzen ist. Ein Verlauf in einem Winkel zu der Aufsetzrichtung kann den Vorteil aufweisen, kann den Vorteil einer höheren Befestigungswirkung aufweisen.

Besonders günstig ist es, wenn eine Dichtung zwischen der Kappe und dem Aufnehmer angeordnet ist. Auf diese Art und Weise können Spalte und Ritzen zwischen den Bauteilen noch besser abgedichtet werden und somit die Hygiene verbessert werden. Die Dichtung kann beispielsweise aus einem Elastomermaterial, insbesondere aus einem Silikonmaterial, hergestellt sein.

Besonders vorteilhaft ist es, wenn die Kappe und/oder der Aufnehmer aus einem metallischen Werkstoff, vorzugsweise Edelstahl oder Aluminium, bevorzugt eloxiertem Aluminium, hergestellt sind. Solche Werkstoffe eignen sich besonders für die in der vorliegenden Erfindung vorgesehenen Pressverbindungen. Sie können dabei z.B. verpresst, insbesondere kaltverschweißt werden, was eine besonders robuste Verbindungsart darstellt. Sie sind außerdem weniger anfällig für eine durch die teils aggressiven Reinigungsmittel verursachte Versprödung. Aus diesem Grund aber auch im Allgemeinen neigen die genannten Werkstoffe deutlich weniger zum Splittern, sodass eine Kontamination der herzustellenden Produkte bzw. Verpackungen weniger wahrscheinlich ist. Zumindest wären etwaige Splitter solcher metallischer Werkstoffe durch Metalldetektoren detektierbar. Zudem können Stöße, die bei anderen Befestigungswerkstoffen bereits ein Zerbrechen zur Folge hätten, bei metallischen, insbesondere Edelstahlwerkstoffen lediglich eine Verformung zur Folge haben, die die Funktion nicht beeinträchtigt. Dadurch kann die Austauschhäufigkeit verringert werden.

Die Erfindung bezieht sich auch auf ein Verfahren zum Befestigen eines Tokens an einer Schutzabdeckung einer Verpackungsmaschine, welches die folgenden Schritte umfasst:
- Vorsehen einer Öffnung in der Schutzabdeckung, wobei sich die Öffnung durch die Schutzabdeckung hindurch von einer ersten Seite der Schutzabdeckung bis zu einer der ersten Seite gegenüberliegenden zweiten Seite der Schutzabdeckung erstreckt,
- Führen eines den Token aufnehmenden Aufnehmers durch die Öffnung hindurch von der ersten Seite aus,
- Abdecken des Aufnehmers durch eine Kappe von der zweiten Seite aus.

Das Verfahren zeichnet sich durch Verpressen des Deckels mit der Kappe aus. Wie weiter oben bereits erwähnt, können verpresste Komponenten eine besonders robuste Art der Verbindung darstellen. Während des Verpressens kann z. B. ein Kaltverschweißen der Komponenten erfolgen.

Das Verfahren kann vorteilhafterweise das Anordnen einer ersten Dichtung zwischen dem Aufnehmer und der ersten Seite der Schutzabdeckung umfassen. Dadurch kann die Abdichtung von Zwischenräumen und Ritzen weiter verbessert werden. Besonders günstig ist es, wenn das Anordnen der ersten Dichtung vor dem Durchführen des Aufnehmers durch die Öffnung erfolgt.

In einer weiteren denkbaren Variante umfasst das Verfahren des Weiteren das Anordnen einer zweiten Dichtung zwischen der Kappe und der zweiten Seite der Schutzabdeckung. Hierdurch können weitere Zwischenräume, in denen sich Schmutzrückstände oder sonstige Ablagerungen sammeln oder halten können, vermieden werden. Besonders vorteilhaft ist es, wenn das Anordnen der zweiten Dichtung vor dem Abdecken des Aufnehmers durch die Kappe erfolgt. Durch diese Reihenfolge kann wiederum das Verfahren zum Befestigen vereinfacht werden.

Die Erfindung bezieht sich auf eine Verpackungsmaschine sowie auf ein Verfahren der vorstehend beschriebenen Art. Im Folgenden wird ein vorteilhaftes Ausführungsbeispiel anhand von Zeichnungen näher erläutert.
- Figur 1: zeigt eine schematische Darstellung einer erfindungsgemäßen Verpackungsmaschine mit darauf positionierten Schutzabdeckungen während des Produktionsbetriebs.
- Figur 2: zeigt die erfindungsgemäße Verpackungsmaschine während einer Produktionspause.
- Figur 3: zeigt eine perspektivische Ansicht einer Schutzabdeckung der Verpackungsmaschine aus den vorhergehenden Figuren.
- Figur 4: zeigt eine perspektivische Detailansicht des in Figur 3 mit IV gekennzeichneten Bereichs.
- Figur 5: zeigt eine seitliche Schnittansicht einer Tokenbefestigungskapsel, die an einer Schutzabdeckung angeordnet ist.
- Figur 6: zeigt eine perspektivische Ansicht eines Aufnehmers einer Tokenbefestigungskapsel.

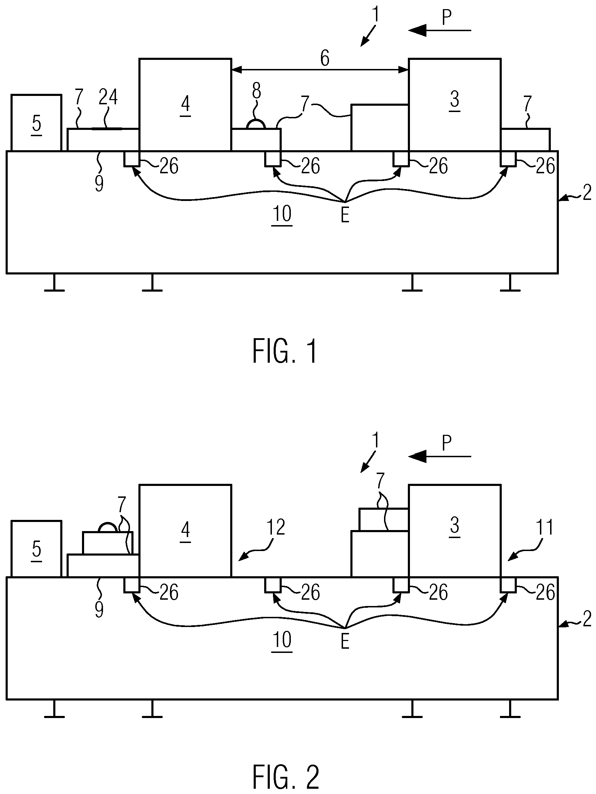

Fig. 1 zeigt schematisch eine Seitenansicht einer Bedienseite einer erfindungsgemäßen Verpackungsmaschine 1, die im vorliegenden Ausführungsbeispiel als Tiefziehverpackungsmaschine ausgebildet ist. Die Verpackungsmaschine 1 kann ein Maschinengestell 2, eine Formstation 3, eine Siegelstation 4 und eine Schneidstation 5 umfassen. Die Formstation 3 kann Mulden in eine nicht näher dargestellte Unterfolie formen. Entlang einer Einlegestrecke 6 können die Mulden der Unterfolie mit Produkten befüllt werden. An der Siegelstation 4 kann eine nicht näher dargestellte Deckelfolie auf die Unterfolie gesiegelt werden. Dies kann erfolgen, nachdem das Muldeninnere evakuiert und/oder begast wurde, beispielsweise, um die Haltbarkeit bei Lebensmitteln zu erhöhen. Die im Folienverbund der Unter- und Deckelfolie ausgebildeten Verpackungen können an der Schneidstation 5 vereinzelt und aus der Verpackungsmaschine 1 maschinell heraustransportiert oder dieser manuell entnommen werden.

Gewisse Bereiche direkt vor oder nach der Formstation 3, der Siegelstation 4 und/oder der Schneidstation 5 müssen während des Betriebs vor einem Eingriff von oben durch einen Bediener geschützt werden, um beispielsweise Verletzungen bei einem Eingriff in ein Hubwerk zu verhindern. Dafür können Schutzabdeckungen 7 an beliebigen Abschnitten der Verpackungsmaschine 1 vorgesehen sein, an denen sie notwendig oder hilfreich sind, insbesondere, wie in Fig. 1 zu erkennen, vor und/oder nach der Formstation 3 und/oder vor und/oder nach der Siegelstation 4.

Zu Wartungs-, Umbau- oder Reinigungszwecken können die lose auf dem Maschinengestell 2 aufgelegten Schutzabdeckungen 7 aus ihrer Position entfernt werden. Vornehmlich aus hygienischen Gründen ist es aber nicht gewünscht, dass die Schutzabdeckungen 7 auf den Boden neben die Verpackungsmaschine 1 gelegt werden. Vor allem bei einer wie üblich täglich durchgeführten Reinigung der Verpackungsmaschine 1 müssen die Schutzabdeckungen 7 von ihrer Position abgenommen werden, um den Bereich darunter für die Reinigung zugänglich zu machen. Dabei sollten auch die Schutzabdeckungen 7 selbst günstig für die Reinigung positioniert sein.

Die Schutzabdeckungen 7 gemäß Fig. 1 können je nach der zu schützenden Zone unterschiedlich groß ausgebildet sein. Dabei sind die jeweiligen Schutzabdeckungen 7 jedoch in Produktionsrichtung P betrachtet gleich breit ausgebildet. Fig. 1 deutet jedoch an, dass die jeweiligen Schutzabdeckungen 7 in Produktionsrichtung P betrachtet unterschiedlich tief und/oder hoch ausgebildet sein können. Auch gleich große Schutzabdeckungen 7 kämen in Betracht.

Die beispielhaft in Fig. 1 vor der Siegelstation 4 positionierte Schutzabdeckung 7 besitzt einen Griff 8, der einem Bediener das Anheben der Schutzabdeckung 7 erleichtert. Der Griff 8 kann auch an den anderen Schutzabdeckungen 7 der Fig. 1 vorgesehen sein.

Fig. 1 zeigt auch, dass die jeweiligen Schutzabdeckungen 7 auf einer Oberseite 9 eines Seitenrahmens 10 der Verpackungsmaschine 1 aufgesetzt sind. Der Seitenrahmen 10 bildet einen Teil des Maschinengestells 2 der Verpackungsmaschine 1 aus. Gemäß Figur 1 besitzt die in Produktionsrichtung P betrachtet hinter der Formstation 4 abgestellte Schutzabdeckung 7 ein Fenster 24.

Fig. 2 zeigt in schematischer Seitenansicht die Verpackungsmaschine 1 während eines Produktionsstops. Gemäß Fig. 2 sind jeweils zwei Schutzabdeckungen 7 auf der Oberseite 9 des Seitenrahmens 10 der Verpackungsmaschine 1 aufeinander gestapelt, um in Produktionsrichtung P betrachtet vor der Formstation 3 einen Zuführbereich 11 und vor der Siegelstation 4 einen weiteren Zuführbereich 12 freizugeben. Dadurch ergibt sich eine Eingriffsmöglichkeit in die jeweiligen Zuführbereiche 11, 12, wodurch in diesen Zonen Reinigungs- und/oder Wartungsarbeiten durchführbar sind. Trotz der beispielhaften Darstellung aus Fig. 2 wäre es selbstverständlich auch möglich, die jeweiligen gestapelten Schutzabdeckungen 7 in Produktionsrichtung P betrachtet vor der Formstation 3 und/oder der Siegelstation 4 zu positionieren, um entsprechende Ausgabebereiche hinter der Formstation 3 bzw. der Siegelstation 4 freizugeben. Weiter vorstellbar wäre es, lediglich einen Stapelturm auf der Oberseite 9 der Verpackungsmaschine 1 auszubilden, um möglichst viele Zonen der Verpackungsmaschine 1 gleichzeitig für Reinigungs- bzw. Wartungsarbeiten freizugeben.

Die Anwesenheit der Schutzabdeckungen 7 kann überprüft werden, insbesondere anhand einer an der Verpackungsmaschine 1 ausgebildeten Erfassungseinheit E. Diese kann z. B. Sensoren 26 aufweisen. In einem Fall, in dem eine Abwesenheit einer oder mehrerer der Schutzabdeckungen 7 oder eine nicht ordnungsgemäße, beispielsweise verkippte, Positionierung derselben auf der Verpackungsmaschine 1 festgestellt wird, kann ein Maschinenstart verhindert werden.

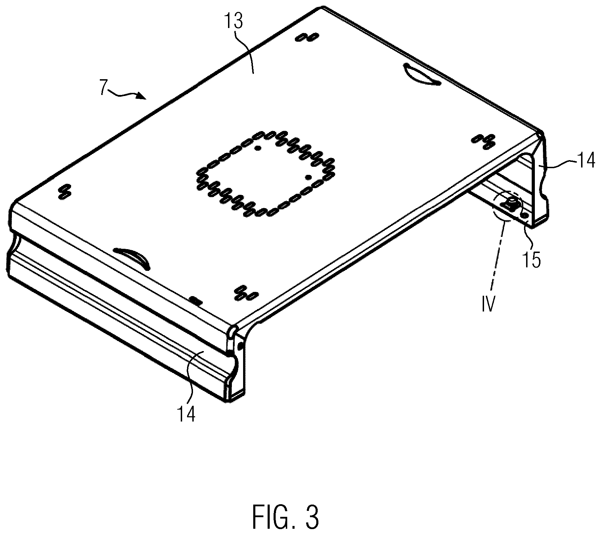

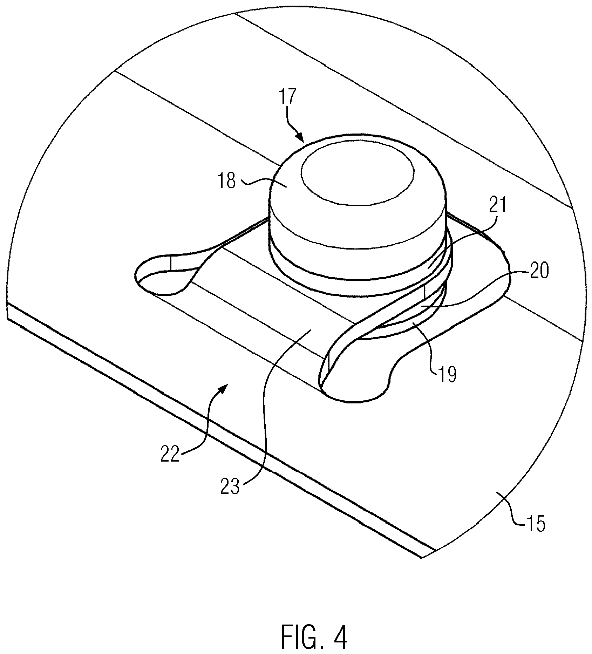

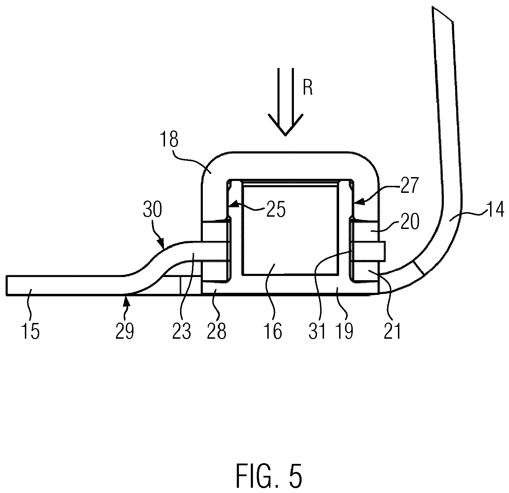

In Figur 3 ist eine perspektivische Ansicht einer der Schutzabdeckungen 7 dargestellt. Diese kann, wie im vorliegenden Ausführungsbeispiel, einen Deckel 13 aufweisen. Des Weiteren können beispielsweise zwei Seitenwände 14 vorgesehen sein, die eine Beabstandung des Deckels 13 von der herzustellenden Verpackung und/oder von dem Maschinengestell 2 gewährleisten. Dies kann jedoch auch durch andere Vorrichtungen gewährleistet werden, beispielsweise durch eine bogenförmige Gestaltung des Deckels 13. Die Schutzabdeckung 7 kann außerdem einen zur Montage eines Tokens 16, im vorliegenden Ausführungsbeispieleines Magneten 16, vorgesehenen Abschnitt 15 aufweisen. Dies kann z. B. ein auf der dem Deckel 13 abgewandten Seite der Seitenwand 14 angeordneter Flansch 15 sein. Dieser kann auch zur Vergrößerung der Aufstandsfläche der Schutzabdeckung 7 dienen. An dem Flansch 15 kann ein Magnet 16 (siehe Figur 5) befestigt sein. Zu diesem Zweck kann eine Tokenbefestigungskapsel 17, im vorliegenden Ausführungsbeispiel eine Magnetbefestigungskapsel 17 (siehe Figur 4), eingesetzt werden.

Figur 4 zeigt eine vergrößerte Ansicht des in Figur 3 mit IV gekennzeichneten Bereichs. Dadurch wird erkennbar, dass die Magnetbefestigungskapsel 17 eine Kappe 18 aufweist. Außerdem ist ein Teil eines Aufnehmers 19 der Magnetbefestigungskapsel 17 zu erkennen. Wie im vorliegenden Ausführungsbeispiel dargestellt, kann die Magnetbefestigungskapsel 17 außerdem eine erste Dichtung 20 und eine zweite Dichtung 21 aufweisen. Es sind jedoch auch Konfigurationen mit lediglich einer oder aber mehr als zwei Dichtungen denkbar. An dem Abschnitt 15, an dem der Magnet befestigt werden soll, d. h. im vorliegenden Ausführungsbeispiel dem Flansch 15, kann eine Befestigungseinrichtung 22 vorgesehen sein. Dabei kann es sich zum Beispiel um eine Lasche 23 handeln, die vorzugsweise gegenüber dem Abschnitt 15 gebogen und/oder erhöht ist.

In der in Figur 5 dargestellten Schnittansicht sind weitere Details der Magnetbefestigungskapsel 18 erkennbar. Es ist zu sehen, dass eine erste Kontaktfläche 25 des Aufnehmers 19 in Kontakt mit einer zweite Kontaktfläche 27 der Kappe 18 ist.

Der Aufnehmer 19 kann einen Anschlagabschnitt 28 aufweisen. Dieser kann wie im vorliegenden Ausführungsbeispiel die Form eines Flansches annehmen. Der Anschlagabschnitt 28 und die erste Dichtung 20 können auf einer ersten Seite 29 der Schutzabdeckung 7 angeordnet sein. Die Kappe 18 und die zweite Dichtung 21 können auf einer zweiten Seite 30 der Schutzabdeckung 7 angeordnet sein. Der Fachmann erkennt, dass in einer Konfiguration ohne die erste und die zweite Dichtung 20, 21 die Kappe 18 auf der erste Seite 29 der Schutzabdeckung 7 angeordnet sein kann und der Anschlagabschnitt 28 des Aufnehmers 19 auf der zweite Seite 30 der Schutzabdeckung 7 angeordnet sein kann. Aus der Zeichnung wird ersichtlich, dass die Erhöhung der Lasche 23 gegenüber dem übrigen Abschnitt 15 zur Magnetmontage einer Dicke des Anschlagabschnitts 28 oder einer Summe der Dicken des Anschlagabschnitt 28 und der ersten Dichtung 20 angepasst sein kann. Angepasst sein bedeutet in diesem Zusammenhang, dass die Erhöhung mindestens gleich groß oder aber größer als die zu vergleichende Dicke gewählt ist.

Des Weiteren ist in Figur 5 zu erkennen, dass der Aufnehmer 19 sich im montierten Zustand durch eine Öffnung 31 erstrecken kann, die in der Schutzabdeckung 7, insbesondere in dem Abschnitt 15 zur Montage des Magneten 16, vorgesehen sein kann. Zur Montage des Magneten 16 an der Schutzabdeckung 7 kann gemäß der Erfindung der Aufnehmer 19 von der ersten Seite 29 aus durch die Öffnung 31 hindurchgeführt werden. Anschließend kann die Kappe 18 von der zweiten Seite 30 aus auf den Aufnehmer 19 aufgesetzt werden. Dies kann in einer Aufsetzrichtung R erfolgen. Die Kappe 18 und der Aufnehmer 19 können dabei derart konfiguriert sein, dass sie bei dem Aufsetzen miteinander kaltverschweißt werden.

In Konfigurationen, die zudem eine oder beide der Dichtungen 20, 21 umfassen, kann die erste Dichtung 20 zwischen dem Aufnehmer 19, vorzugsweise dem Anschlagabschnitt 28, und der ersten Seite 29 der Schutzabdeckung angeordnet werden. Dies kann vor dem Durchführen des Aufnehmers 19 durch die Öffnung 31 erfolgen oder danach, beispielsweise durch Überziehen der ersten Dichtung 20 über den Anschlagabschnitt 28. Alternativ oder zusätzlich kann die zweite Dichtung 21 zwischen der Kappe 18 und der zweiten Seite 30 der Schutzabdeckung 7 angeordnet werden. Dies kann vor dem Abdecken des Aufnehmers 19 durch die Kappe 18 erfolgen oder danach, beispielsweise durch Überziehen der zweiten Dichtung 20 über die Kappe 18. Das Anordnen der zweiten Dichtung kann insbesondere nach dem Durchführen des Aufnehmers 19 durch die Öffnung 31 erfolgen.

Aus der Figur 5 erschließt sich dem Fachmann, dass der Anschlagabschnitt 28 des Aufnehmers 19 zumindest teilweise größere Abmessungen, insbesondere einen größeren Durchmesser, aufweisen kann als die Öffnung 31. Das gleiche gilt für die Abmessungen der Kappe 18. Ein durch die Öffnung 31 hindurchgeführter Abschnitt des Aufnehmers 19 kann dagegen kleinere Abmessungen insbesondere einen kleineren Durchmesser, als die Öffnung 31 aufweisen.

Die Kappe 18 und der Aufnehmer 19 können, vorzugsweise unter Berücksichtigung der Dichtungen 20, 21, insbesondere derart ausgelegt sein, dass nach dem Aufsetzen der Kappe 18 auf den Aufnehmer 19 der Abschnitt 15 der Schutzabdeckung 7 zwischen dem Aufnehmer 19, insbesondere dem Anschlagabschnitt 28, und der Kappe 18 bzw. zwischen der ersten und zweiten Dichtung 20, 21, geklemmt ist. Dadurch ist eine besonders sichere Art der Befestigung gewährleistet.

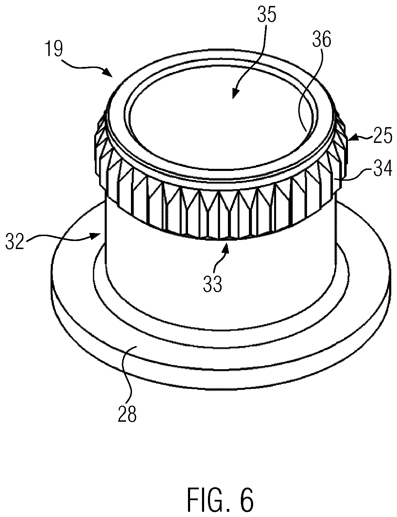

Weitere Details des Aufnehmers 19 sind aus der perspektivischen Ansicht aus Figur 6 ersichtlich. Nun ist zum Beispiel zu erkennen, dass die erste Kontaktfläche 25 eine Rändelung 33 aufweist. Als Rändelung 33 im Sinne der Erfindung ist z. B. eine Vielzahl von Erhebungen und/oder Vertiefungen anzusehen. Wie im vorliegenden Ausführungsbeispiel kann die Rändelung 33 eine Vielzahl von Rillen 34 umfassen. Diese können durch Einbringung von Vertiefungen in den Aufnehmer und/oder durch das Vorsehen von Erhebungen erzeugt werden. Obwohl dies nicht im vorliegenden Ausführungsbeispiel dargestellt ist, versteht ein Fachmann, dass eine Rändelung 30 auch an der zweiten Kontaktfläche 27 der Kappe 18 vorgesehen sein kann. In beiden Fällen können die Rillen 34 sich, wie im vorliegenden Ausführungsbeispiel, parallel zur Aufsetzrichtung R erstrecken. Darüber hinaus ist eine Öffnung 35 zu erkennen, die Zugang zu einer Vertiefung 36 erlauben kann, in der der Magnet 16 aufgenommen sein kann.

## Patentansprüche

1. Verpackungsmaschine (1) umfassend eine Schutzabdeckung (7) und eine an der Schutzabdeckung (7) angeordnete Tokenbefestigungskapsel (17) mit einem Aufnehmer (19), der zum Aufnehmen eines Tokens (16) konfiguriert ist und eine erste Kontaktfläche (25) aufweist, und mit einer Kappe (18), die zum Abdecken einer Öffnung (35) des Aufnehmers (19) konfiguriert ist und eine zweite Kontaktfläche (27) aufweist, wobei die erste Kontaktfläche (25) und die zweite Kontaktfläche (27) miteinander in Kontakt sind, wenn die Kappe (18) die Öffnung (35) des Aufnehmers (19) abdeckt, **dadurch gekennzeichnet, dass** der Aufnehmer (19) oder die Kappe (18) eine Rändelung (33) aufweist, wobei die Rändelung (33) an der ersten oder der zweiten Kontaktfläche (25, 27) vorgesehen ist.

2. Verpackungsmaschine nach Anspruch 1, **dadurch gekennzeichnet, dass** die Rändelung (33) Rillen (34) aufweist.

3. Verpackungsmaschine nach Anspruch 2, **dadurch gekennzeichnet, dass** die Rillen (34) parallel oder in einem Winkel zu einer Aufsetzrichtung (R) verlaufen, in der die Kappe (18) auf den Aufnehmer (19) aufsetzbar ist.

4. Verpackungsmaschine nach einem der vorangehenden Ansprüche, **gekennzeichnet durch** eine Dichtung (20, 21), die zwischen der Kappe (18) und dem Aufnehmer (19) angeordnet ist.

5. Verpackungsmaschine nach Anspruch 4, **dadurch gekennzeichnet, dass** die Dichtung (20, 21) aus einem Elastomermaterial, insbesondere einem Silikonmaterial, hergestellt ist.

6. Verpackungsmaschine nach einem der vorangehenden Ansprüche, **dadurch gekennzeichnet, dass** die Kappe (18) und/oder der Aufnehmer (19) aus Edelstahl oder vorzugsweise eloxiertem Aluminium hergestellt sind.

7. Verfahren zum Befestigen eines Tokens (16) an einer Schutzabdeckung (7) einer Verpackungsmaschine (1), umfassend:
Vorsehen einer Öffnung (31) in der Schutzabdeckung (7), wobei sich die Öffnung (31) durch die Schutzabdeckung (7) hindurch von einer ersten Seite (29) der Schutzabdeckung (7) bis zu einer der ersten Seite (29) gegenüberliegenden zweiten Seite (30) der Schutzabdeckung (7) erstreckt,
Führen eines den Token (16) aufnehmenden Aufnehmers (19) durch die Öffnung (31) hindurch von der ersten Seite (29) aus,
Abdecken des Aufnehmers (19) durch eine Kappe (18) von der zweiten Seite (30) aus,
**gekennzeichnet durch**
Verpressen des Aufnehmers (19) mit der Kappe (18).

8. Verfahren nach Anspruch 7, **gekennzeichnet durch** Anordnen einer ersten Dichtung (20) zwischen dem Aufnehmer (19) und der ersten Seite (29) der Schutzabdeckung (7).

9. Verfahren nach Anspruch 8, **dadurch gekennzeichnet, dass** das Anordnen der ersten Dichtung (20) vor dem Durchführen des Aufnehmers (19) durch die Öffnung (31) erfolgt.

10. Verfahren nach einem der Ansprüche 7 bis 9, **gekennzeichnet durch** Anordnen einer zweiten Dichtung (21) zwischen der Kappe (18) und der zweiten Seite (30) der Schutzabdeckung (7).

11. Verfahren nach Anspruch 10, **dadurch gekennzeichnet, dass** das Anordnen der zweiten Dichtung (21) vor dem Abdecken des Aufnehmers (19) durch die Kappe (18) erfolgt.

## Claims

1. A packaging machine (1) comprising a protective cover (7) and a token fastening capsule (17) arranged on the protective cover (7), the fastening capsule (17) including a receptacle (19), which is configured for receiving a token (16) and which has a first contact surface (25), the fastening capsule (17) further including a cap (18) configured for covering an opening (35) of the receptacle (19) and having a second contact surface (27), the first contact surface (25) and the second contact surface (27) being in contact with each other, when the cap (18) covers the opening (35) of the receptacle (19), **characterized in that** the receptacle (19) or the cap (18) is provided with a knurl (33), the knurl (33) being provided on the first or the second contact surface (25, 27).

2. The packaging machine according to claim 1, **characterized in that** the knurl (33) comprises grooves (34).

3. The packaging machine according to claim 2, **characterized in that** the grooves (34) extend parallel to or at an angle to an attaching direction (R), in which the cap (18) can be attached to the receptacle (19).

4. The packaging machine according to one of the preceding claims, **characterized by** a seal (20, 21) arranged between the cap (18) and the receptacle (19).

5. The packaging machine according to claim 4, **characterized in that** the seal (20, 21) is produced from an elastomeric material, in particular a silicone material.

6. The packaging machine according to one of the preceding claims, **characterized in that** the cap (18) and/or the receptacle (19) are produced from stainless steel or from preferably anodized aluminum.

7. A method of fastening a token (16) on a protective cover (7) of a packaging machine (1), comprising the steps of
providing an opening (31) in the protective cover (7), the opening (31) extending through the protective cover (7) from a first side (29) of the protective cover (7) to a second side (30) of the protective cover (7), the second side (30) being opposite the first side (29),
passing a receptacle (19), which receives the token (16), through the opening (31) from the first side (29),
covering the receptacle (19) by a cap (18) from the second side (30),
**characterized by**
press-fitting the receptacle (19) to the cap (18).

8. The method according to claim 7, **characterized by** arranging a first seal (20) between the receptacle (19) and the first side (29) of the protective cover (7).

9. The method according to claim 8, **characterized in that** the first seal (20) is arranged prior to passing the receptacle (19) through the opening (31).

10. The method according to one of the claims 7 to 9, **characterized by** arranging a second seal (21) between the cap (18) and the second side (30) of the protective cover (7).

11. The method according to claim 10, **characterized in that** the second seal (21) is arranged prior to covering the receptacle (19) by the cap (18).

## Revendications

1. Machine d'emballage (1) comprenant un couvercle de protection (7) et un embout de fixation de jeton (17) disposée sur le couvercle de protection (7), comprenant un réceptacle (19) configuré pour recevoir un jeton (16) et ayant une première surface de contact (25), et un capuchon (18) configuré pour couvrir une ouverture (35) du réceptacle (19) et ayant une seconde surface de contact (27), la première surface de contact (25) et la seconde surface de contact (27) sont en contact l'une avec l'autre lorsque le capuchon (18) recouvre l'ouverture (35) du récepteur (19), **caractérisé en ce que** le récepteur (19) ou le capuchon (18) présente une molette (33), la molette (33) étant prévue sur la première ou la seconde surface de contact (25, 27).

2. Machine d'emballage selon la revendication 1, **caractérisée en ce que** la molette (33) présente des rainures (34).

3. Machine d'emballage selon la revendication 2, **caractérisée en ce que** les rainures (34) sont parallèles ou inclinées par rapport à une direction de montage (R) dans laquelle le capuchon (18) peut être monté sur le récepteur (19).

4. Machine d'emballage selon l'une des revendications précédentes, **caractérisée par** un sceau (20, 21) disposé entre le capuchon (18) et le récepteur (19).

5. Machine d'emballage selon la revendication 4, **caractérisée en ce que** le joint (20, 21) est constitué d'un matériau élastomère, en particulier d'un matériau en silicone.

6. Machine d'emballage selon l'une des revendications précédentes, **caractérisée en ce que** le capuchon (18) et/ou le récipient (19) sont en acier inoxydable ou de préférence en aluminium anodisé.

7. Procédé de fixation d'un jeton (16) sur un couvercle de protection (7) d'une machine d'emballage (1), comprenant les opérations suivantes:
prévoir une ouverture (31) dans le couvercle de protection (7), l'ouverture (31) s'étendant à travers le couvercle de protection (7) d'un premier côté (29) du couvercle de protection (7) à un second côté (30) du couvercle de protection (7) opposé au premier côté (29),
guider un récepteur (19) recevant le jeton (16) à travers l'ouverture (31) depuis le premier côté (29),
recouvrir le récepteur (19) avec un capuchon (18) à partir du second côté (30),
**caractérisé par** le fait
d'appuyer sur le récepteur (19) avec le capuchon (18).

8. Procédé selon la revendication 7, **caractérisé par** l'agencement d'un premier joint (20) entre le récepteur (19) et le premier côté (29) du couvercle de protection (7).

9. Procédé selon la revendication 8, **caractérisé en ce que** la mise en place du premier joint (20) est effectuée avant que le récepteur (19) ne soit passé à travers l'ouverture (31).

10. Procédé selon l'une quelconque des revendications 7 à 9, **caractérisé par** le placement d'un second joint (21) entre le capuchon (18) et le second côté (30) du couvercle de protection (7).

11. Procédé selon la revendication 10, **caractérisé en ce que** la mise en place du second joint (21) est effectuée avant de recouvrir le récepteur (19) par le capuchon (18).
